# EUROPEAN PATENT APPLICATION

(11) **EP 1 768 146 A1**
(43) Date of publication of application: **28.03.2007**
(21) Application number: 05745700.4
(22) Date of filing: 26.05.2005
(51) Int. Cl.: H01H 13/70, G06F 3/02, H01H 13/02, H01H 13/04, H04M 1/02

(54) **KEY UNIT WITH CASING**

(30) Priority: 28.05.2004 JP 2004158808; 28.05.2004 JP 2004158807
(71) Applicant: SUNARROW LTD., Chuo-ku, Tokyo 104-0032 (JP)
(72) Inventor: IOHARA, Yuichi, Sashima-gun, Ibaraki 3060222 (JP)
(74) Representative: Sulzbach, Werner
(86) International application number: PCT/JP2005/010094
(87) International publication number: WO 2005/117047

(57) **Abstract**

A key unit having means whereby a reinforcement plate, which is formed of a rigid material, such as a metal or a hard resin, and is prepared in order to provide a shape maintenance property for a rubber keypad included in a key unit, is employed not simply for maintaining the shape of the keypad, but more variously, as a functional design component of a mobile device that includes a key unit.

A key unit having a case wherein a key operation portion of a keypad is formed using a flexible rubber material, and the other portion of the keypad is formed using a rigid reinforcement plate, or is reinforced by a reinforcement plate, **characterized by** the integral formation, with the key unit that includes the reinforcement plate, of at least a part of a case for a mobile device on which the key unit is to be mounted.

## Description

### Technical Field

The present invention relates to a key unit that is used for a mobile device, such as a cellular phone or a portable information terminal device (PDA), and that includes a reinforcement plate that provides a rubber key pad for a shape maintenance property, and also employs part of the reinforcement plate as a design component.

### Background Art

A key unit is one type of a constituent of a mobile device, such as a cellular phone or a portable information terminal device (PDA), and is a unit wherein multiple switch manipulation keys (pushbuttons) are assembled and arranged on a single sheet. One key includes a hard resin key top, which is bonded to the obverse face of a flexible keypad made of a flexible rubber material, such as silicon rubber or thermoplastic elastomer, and a switch protrusion (a so-called "plunger"), which is formed on the reverse face of the keypad at a position corresponding to that of the key top. When a circuit board, including switch components, is closely mounted on the lower face of the thus arranged key unit, the key switches are arranged at locations corresponding to the individual keys.

However, since a conventional rubber keypad is too flexible and its shape maintenance is not satisfactory, various inconveniences in use have been encountered, e.g., the gap between the key tops cannot be accurately maintained and the automatic assembly of the key pad is difficult. Especially when, a key frame (wherein holes corresponding to the individual keys are formed in a case) is provided for a case in order to maintain the gaps between the keys or to position the keys, a new inconvenience is that key tops will catch on the key frame and will not be returned.

In order to resolve these shortcomings, according to one proposal, by employing a configuration wherein a hard plate member (hereinafter referred to as a "reinforcement plate") is additionally provided for a keypad, maintenance of the shape is obtained by providing rigidity for the key unit, so as to eliminate the key frame from the case. The present inventor submitted this invention with the title "Hard Base Key Unit" (patent document 1: Japanese Patent Laid-Open Application No. 2003-178639).

According to the hard base key unit in patent document 1, the portion wherein a flexible rubber material is used is limited to the key manipulation portion of the keypad, and other portions of the keypad are replaced by a hard resin plate that furnishes reinforcement. In the hard resin plate that serves as a reinforcement plate, through holes are formed along the outer edge of the key manipulation portion, and a flexible rubber film is deposited on the peripheral walls of the through holes. In addition to the film deposited on the walls around the peripheries of the through holes, there may be a case wherein a flexible rubber material covers the entire upper face of the hard resin plate, together with the through holes, or wherein the entire hard resin plate, including the through holes, is enclosed by a flexible rubber material.

However, the role of the reinforcement plate described in patent document 1 is simply to provide rigidity for the keypad and to serve as an optical guide plate, and there is little intent that this reinforcement plate be positively employed as a design component of the device.

### Disclosure of the Invention

The objective to be achieved by the present invention is to find means whereby a reinforcement plate, which is formed of a rigid material, such as a metal or a hard resin, and is prepared in order to provide a shape maintenance property for a rubber keypad included in a key unit, is employed not simply for maintaining the shape of the keypad, but more variously, as a functional design component of a mobile device that includes a key unit.

According to one means for achieving the above objective, a part of the case of a target mobile device to which a key unit is to be attached is integrally formed with a key unit by using a rigid reinforcement plate. That is, a case built-in key unit having a case that employs a rigid reinforcement plate is provided.

### Advantages of the Invention

Conventionally, in order to produce one mobile device, it is required that at least three sections, a circuit module including a display unit, a case and a key unit, be assembled. On the other hand, for a key unit equipped with a case according to this invention (hereinafter referred to as a "key unit with a case"), for example, a case is divided horizontally into two portions, and the upper half portion (key unit with a case) of the case, wherein a key unit is integrally formed, is assembled with the lower half portion (a circuit module with a case) of the case, wherein a circuit module is mounted, so as to produce one mobile device. Therefore, a key unit attachment step is eliminated, and the final assembly step is simplified.

Furthermore, decoration (the forming of symbols, characters and graphics, the coloring and the provision of patterns), using painting or printing applied to the case portion and the key unit portion of the key unit with the case, can also be performed at the same time or during the above described step.

Further, a production method can also be employed whereby, immediately before shipment, a required number of key units, with cases that are produced based on a specific design specification (e.g., a language specification used for a specific location), are assembled, with a large number of circuit modules, to produce cases that are manufactured regardless of the design specifications.

In addition, a use method is available whereby a plurality of key units having cases corresponding to different applications or designs are prepared for a single circuit module provided with a case, and as needed, or in accordance with taste, a key unit accompanying a case is detached and exchanged appropriately.

Moreover, according to the key unit with the case of the invention, the original effects of the reinforcement plate, such as the provision of rigidity for the key pad, the shape maintenance for the key unit, the processing performed to deal with automatic assembly, and improvements for the positioning accuracy of a key top, can also be provided.

Further, when the case of the key unit is formed of a light and rigid metal, ribs that improve the strength are not necessary, compared with a synthetic resin case, and the entire case that is formed can be thinner than a synthetic resin case. As a result, this can contribute to a reduction in the weight of the mobile device.

### Brief Description of the Drawings

Fig. 1 is a plan view of a key unit having a case according to a first mode;
Fig. 2 is a plan view of the state before the key top of the key unit having the case, in Fig. 1 for the first mode, is mounted;
Fig. 3 is a plan view of the state of the key unit having the case for the first mode, viewed from the side (the reverse face) opposite Fig. 1;
Fig. 4 is a plan view only of the case portion of the key unit having the case for the first mode;
Fig. 5 is a cross-sectional view taken along line a-a in Fig. 1;
Fig. 6 is a cross-sectional view taken along line b-b in Fig. 1;
Fig. 7 is an enlarged cross-sectional view of an example wherein a decorative layer is provided for the case portion of the key unit having the case for the first mode;
Fig. 8 is a plan view of a key unit having a case according to a second mode;
Fig. 9 is a cross-sectional view taken along line c-c in Fig. 8;
Fig. 10 is a plan view of a key unit having a case according to a third mode;
Fig. 11 is a cross-sectional view taken along line d-d in Fig. 10;
Fig. 12 is a perspective view of a modification wherein the key unit having the case of the invention is employed for a mobile device;
Fig. 13 is a vertical cross-sectional view of the modification in Fig. 12 wherein the key unit having the case of the invention is employed;
Fig. 14 is a plan view of a key unit having a case according to the first mode;
Fig. 15 is a plan view of the state before the key top of the key unit having the case in Fig. 1, for the first mode, is mounted;
Fig. 16 is a plan view of the state of the key unit having the case for the first mode, viewed from the side (the reverse face) opposite Fig. 1;
Fig. 17 is a plan view only of the case portion of the key unit having the case for the first mode;
Fig. 18 is a cross-sectional view taken along line a-a in Fig. 1;
Fig. 19 is a cross-sectional view taken along line b-b in Fig. 1;
Fig. 20 is a plan view of a light blocking sheet used for the key unit having the case for the first mode;
Fig. 21 is an enlarged cross-sectional view of an example wherein a decorative layer is formed on the reverse face (the lower face) of the case portion of the key unit having the case for the first mode;
Fig. 22 is an enlarged cross-sectional view of an example wherein a decorative layer is formed on the obverse face (the upper face) of the case portion of the key unit having the case for the first mode;
Fig. 23 is a plan view of a key unit with a case according to a second mode of the present invention;
Fig. 24 is a cross-sectional view taken along line c-c in Fig. 11;
Fig. 25 is a plan view of a key unit having a case according to a third mode;
Fig. 26 is a cross-sectional view taken along line d-d in Fig. 12;
Fig. 27 is a perspective view of a modification wherein the key unit having the case of the invention is employed for a mobile device; and
Fig. 28 is a vertical cross-sectional view of the modification in Fig. 15 wherein the key unit having the case of the invention is employed.

### Best Modes for Carrying Out the Invention

For a key unit having a case according to the present invention, one or multiple metal materials selected among various types of precious metal, such as magnesium, aluminum, stainless steel, titanium, copper and gold, and various types of alloys can be employed to form a case for a mobile device that includes a reinforcement plate. As a manufacturing method, an appropriate procedure, such as casting, forging or press forming, can be employed. Further, a case portion that is integrally formed with a reinforcement plate constitutes the whole or a part of the case of a mobile device.

Metal used as the material for the case, including the reinforcement plate, is not limited to a single type. For example, for a metal type that is not strong enough to form the entire case, but provides a design advantage, such as color, when it is used for a specific portion, a plurality of such metal materials may be employed for the formation.

For a key unit having the case of the invention, when a case, to include the rigid reinforcement plate, is made of metal, basically, illumination can not be provided for the individual sections of the case. However, properly positioned transparent holes, for light transmission, can be formed in portions, such as exposed portions, whereat illumination can be obtained, so that light can be scattered through these holes. In this case, from the viewpoint of the elimination of humidity and dust contamination, it is preferable that the transparent holes be embedded in a light transmission plastic or a flexible rubber material.

Furthermore, according to the key unit having the case of the invention, the original texture and the original color of the material can also be provided by polishing the surfaces of the case and the exposed portion. In this case, it is preferable that a proper transparent protective layer be formed on the surfaces of the pertinent portions.

For the key unit having the case of the invention, in order to more effectively utilize the rigid reinforcement plate as a functional design element, a part of the reinforcement plate, aside from the case component portion, can also be externally exposed (such a portion is called an "exposed portion"). The location whereat the reinforcement plate is partially exposed can be between the individual keys of a key arrangement section, or in an annular portion enclosing a set of multiple keys. As an example form, one part of the exposed reinforcement plate may enclose, as a key frame, the individual key tops.

An arbitrary shape can be employed for the exposed portion, and a character, a symbol or a pattern may be formed. In addition to the metal case, part or all of the case, including the reinforcement plate, or the exposed portion that is formed may be transparent (colored or uncolored), and light may be scattered through that portion to obtain illumination. It is preferable that in this case the material be a superior light-transmitting hard resin, such as PC (polycarbonate resin), PET (polyethylene terephthalate resin) or PMMA (polymethyl methacrylate/acrylic resin). Multi-color formation of the individual sections of the case may be effected by using two or more types of resins, including colored resins.

An arbitrary light source, such as an LED (Light-Emitting Diode); which is generally employed, or an EL sheet, for which EL (ElectroLuminescent) device is formed as a sheet, can be employed as a light source used for the above described illumination and for the illumination of keys, and the location of the light source is not especially limited. When, for example, an EL sheet is employed, the EL sheet can be glued to the obverse face of a print circuit board or to the obverse or reverse face of a case or a reinforcement plate, or can be integrally formed with the case or the reinforcement plate (insert forming). Especially when an EL sheet that enables multi-color light emission is employed, illumination with arbitrary colors can be performed independently for the individual keys, the individual portions of the case, part or all of the exposed portion, and the individual regions into which the keys are appropriately grouped.

As well as for the key tops, various methods for decorating the individual portions of the case and the exposed portion can be employed. For example, printing (including so-called hot stamping, which is one type of thermal transfer printing method), painting, various film deposition methods (plating, CVD, evaporation, sputtering, ion plating, etc.) using metals or non-metals, and methods (etching using a laser beam) for further processing the decorative effects obtained using these methods can be employed. Instead of directly decorating a material that forms the exposed portion, the obverse face of the exposed portion may be covered with a sheet member, such as a plastic film, and one side or both sides of the sheet member may be variously decorated. Then, as well as for the individual keys, individual portions of the case and the exposed portion can be illuminated by light projected by the light source, in addition to the various decorations described above.

### First Mode (Case wherein a case, including a reinforcement plate, is made of metal)

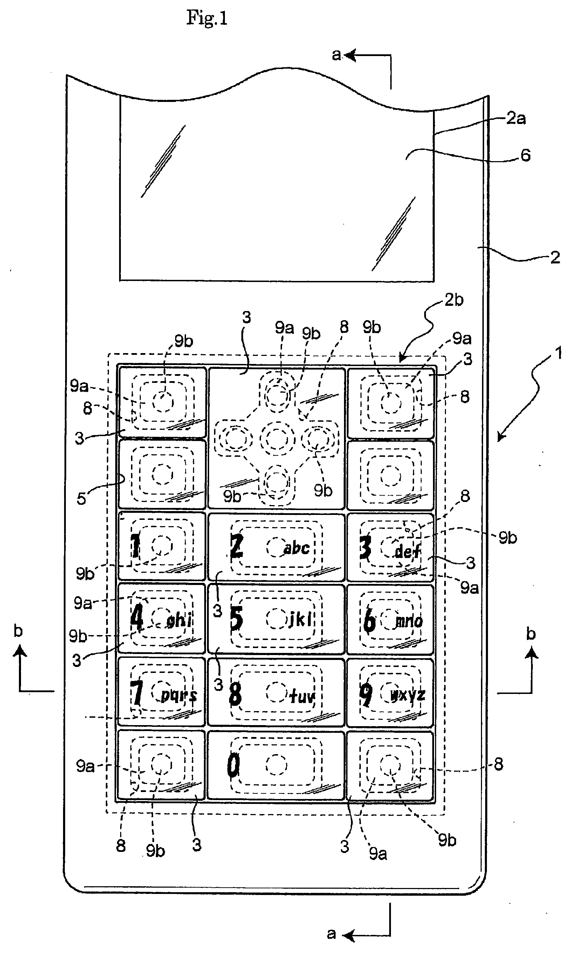

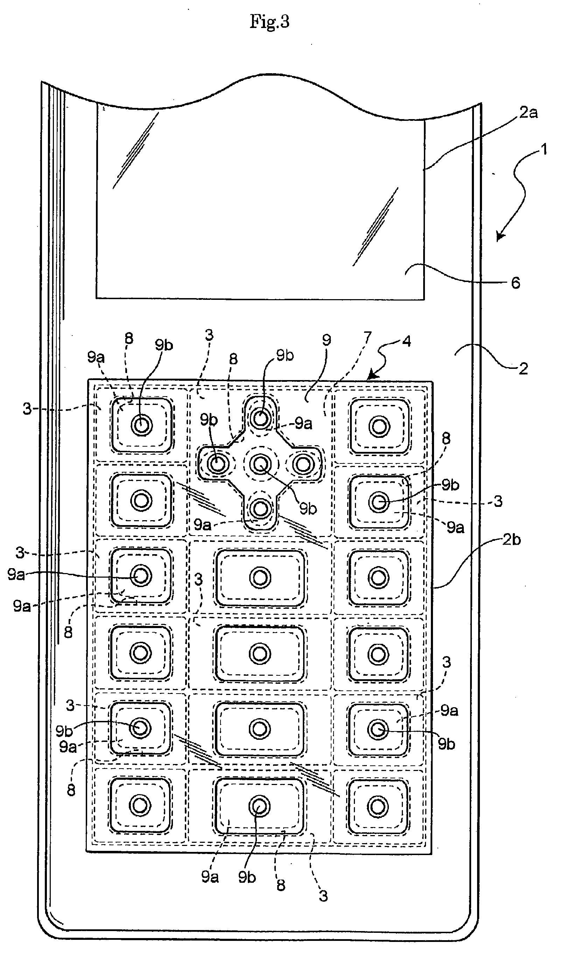

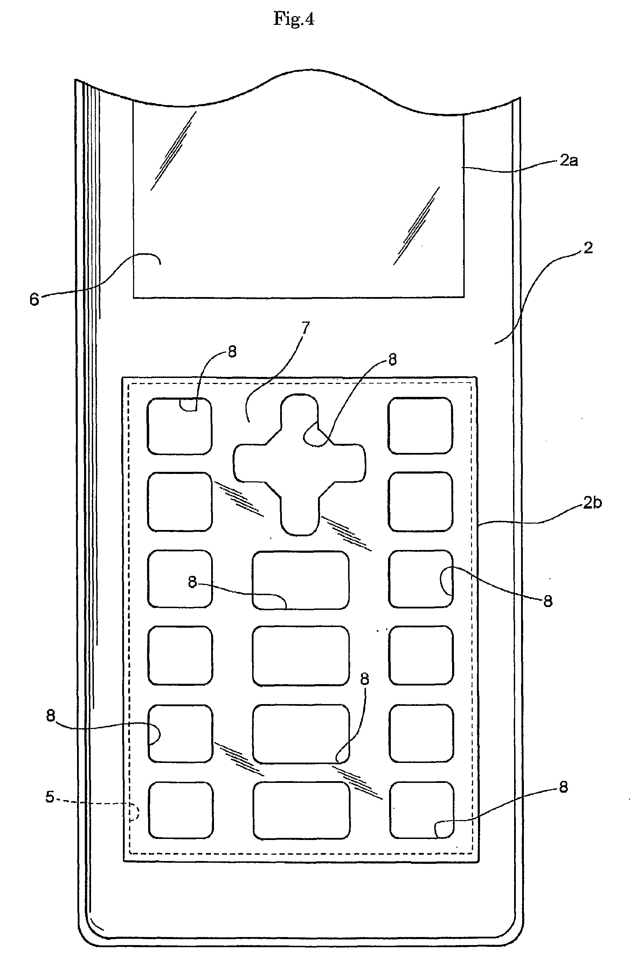

A key unit with a case according to a first mode of the present invention is shown in Figs. 1 to 7. As a whole, a key unit 1 with a case (hereinafter simply referred to as a "key unit") constitutes the upper case (the upper half segment of a case horizontally divided in two) of a cellular phone.

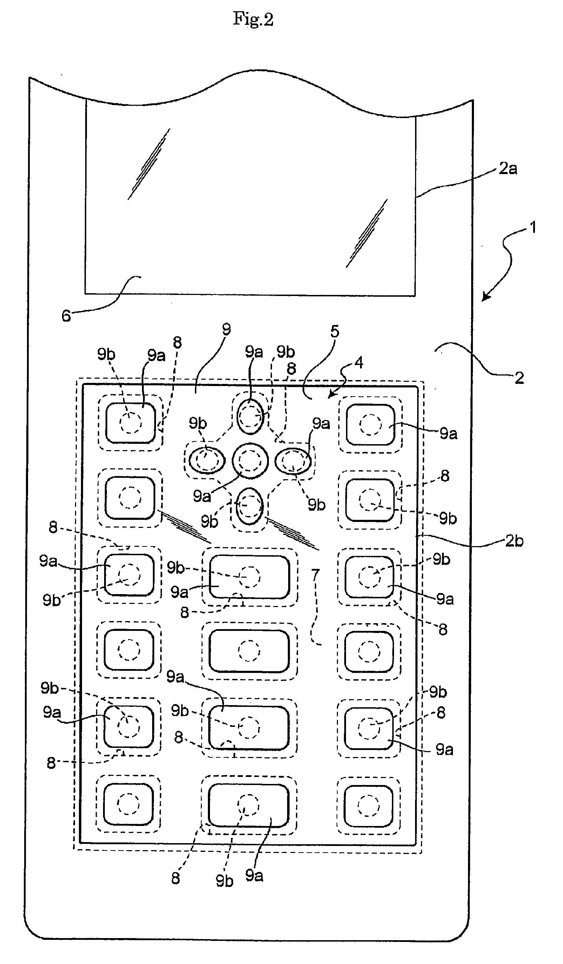

As is shown in Figs. 1 to 3 and Figs. 5 and 6, the key unit 1 comprises a case 2 having a desired shape. As will be described later, the case 2 is formed of an appropriate, light, thin and rigid metal. As is shown in Fig. 2, a clear window 2a is formed in the upper center of the case 2, and a key arrangement portion 2b, wherein three arrays of keys (key groups), in total, are arranged, is located in the lower center of the case 2. Key tops 3, 3, ..., consisting of the key group and a keypad 4, are located in the key arrangement portion 2b, i.e., the key tops 3, 3, .. . and the keypad 4 are located in a recessed portion 5 that is formed in the key arrangement portion 2b. A cover member 6 made of a transparent resin is fitted into the window 2a to close the opening. By employing the bottom plate, a reinforcement plate 7 that serves as part of the keypad 4 is formed in the recessed portion 5, and multiple transparent holes 8, 8, ..., having various shapes, are formed in the reinforcement plate 7. It should be noted that a so-called narrow pitch key, according to which between the key tops 3 there is a gap of 0.3 mm or smaller (preferably about 0.1 mm), is employed for the key unit 1.

The keypad 4 includes the reinforcement plate 7 and pad members 9, which are key manipulation portions. The transparent holes 8, 8, ... in the reinforcement plate 7 are closed by the pad members 9. As shown in Figs. 2, 3, 5 and 6, the pad members 9 include key fixing portions 9a, 9a, ..., which are top film portions, composed of a flexible rubber material, that are securely bonded to the inner walls of the openings of the individual transparent holes 8, that are upright and shaped like skirts relative to the positions inside the opening edges of the transparent holes 8, and on which the key tops 3 are mounted and fixed. The portions that close the openings of the individual transparent holes 8 are coupled by thin film portions that cover the upper and lower faces of the reinforcement plate 7. As a result, the reinforcement plate 7 is vertically sandwiched by the pad members 9; however, this arrangement need not always be employed, and an independent structure may be provided for the portion at each transparent hole 8.

The pad members 9 are formed as films by using various types of light transmitting rubber materials, such as silicon rubber, or thermoplastic elastomers, i.e., by using a flexible rubber material. The keypad 4 is provided, for example, by insert forming of the case 2 that has already been obtained during the production of the pad members 9. It is preferable that, at least for the portion corresponding to the reinforcement plate 7 of the case 2 that is to be integrally bonded to the pad members 9, various surface improvement processes and the primer process for increasing the adhesion between the metal and the flexible rubber material be performed before the insert forming (this is also applied for the following other modes).

In the key fixing portions 9a of the pad members 9, the key tops 3 are secured to one side (upper faces) by an adhesive, and protrusions (plungers) 9b, 9b, ... for pressing switches are integrally formed on the side opposite the side whereat the key fixing portions 9a are formed. According to the above described arrangement, wherein the case 2, the reinforcement plate 7 and the pad members 9 are integrally formed, a superior waterproof and dustproof structure can be provided for the key portion of the conventional mobile device, for which the waterproofing and dustproofing are the most fragile.

The case 2 of the key unit 1 is formed using a method, such as casting, forging or sheet metal processing, that employs aluminum, magnesium, stainless steel, titanium and various types of alloys, while the key tops 3 are formed of a hard resin having superior transparency, such as PC (polycarbonate resin), PET (polyethylene terephthalate resin) or PMMA (polymethyl methacrylate/acrylic resin). The pad members 9 are formed like a film structure by using an arbitrary type of rubber material, such as a light-transmitting silicon rubber, or a thermoplastic elastomer, i.e., a light-transmitting, flexible rubber material. The keypad 4 is formed using so-called insert forming, whereby the pad members 9 are formed while the case 2 that has been molded is held in a die.

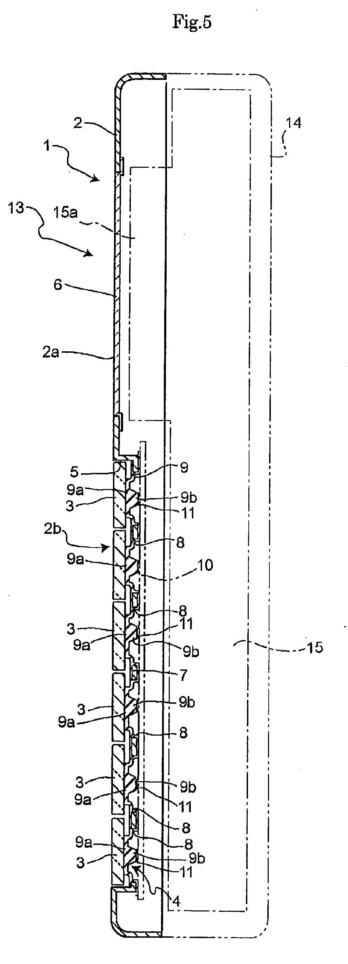

In Figs. 5 and 6, reference numeral 10 denotes a print circuit board on which multiple switch elements (metal dome switches, contacts (not shown), etc.) 11, 11, ... are arranged. Further, in this mode, the key fixing portions 9a, 9a, ... are so structured that they project outward, toward one side (upward); however, this structure need not always be employed, and an appropriate shape can be employed, e.g., the key fixing portions 9a, 9a, ... may be formed at the same height as the surface of the reinforcement plate 7. In short, the key fixing portions 9a, 9a, ... need only be shaped so that, when a key top 3 is pressed, a switch element 11 can be accurately operated by a plunger 9b.

On the upper faces or the lower faces (the faces whereat the key tops 3 are bonded to the pad members 9) of the key tops 3, 3, ..., decorations, including characters and symbols that represent the functions of corresponding keys, are provided by using the various decorative methods described above. Further, the same decorations are provided for part of the recessed portion 5 of the key arrangement portion 2b, i.e., the surface of the individual portions of the case 2, except for the outer edge of the reinforcement plate 7.

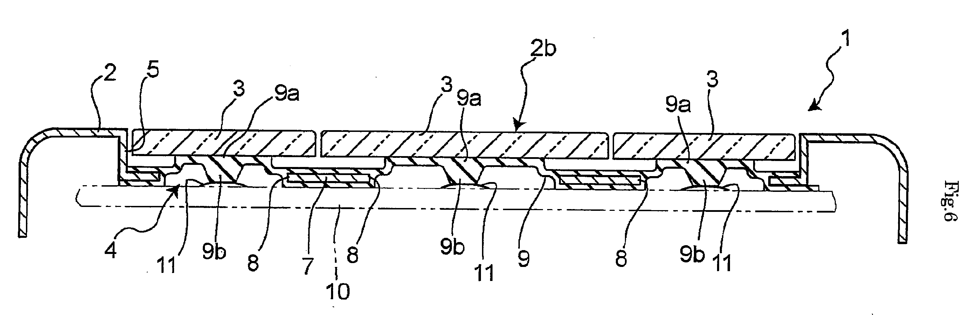

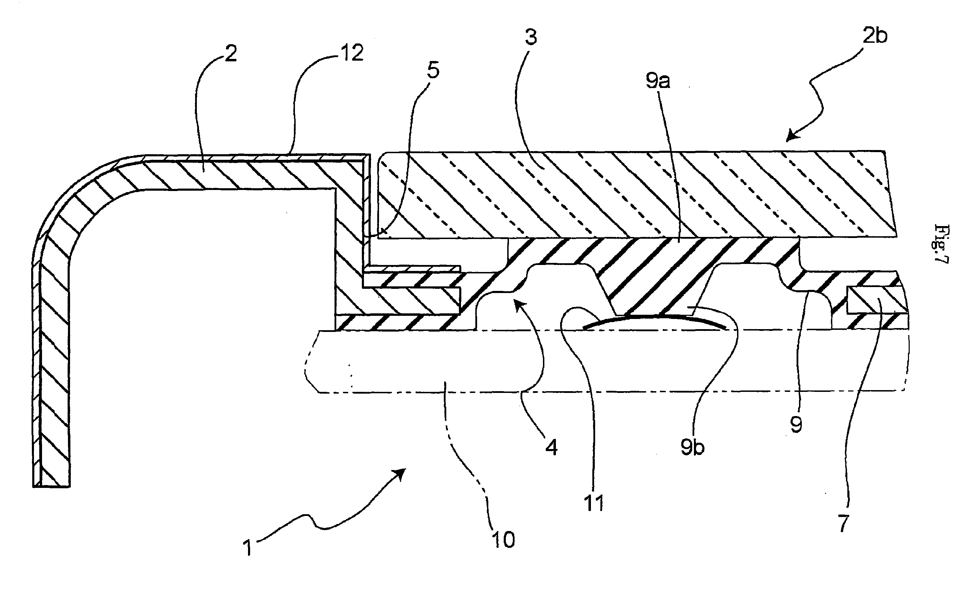

As shown in Fig. 7, a decorative layer 12 is formed on the surface (upper face) of the case 2 using arbitrary means. The decorative layer 12 includes a plurality of layers inherent to various decorative methods. These layers, when decorative printing or painting is provided for the surface, are, for example, a character layer for which positive or negative characters, such as letters and symbols, are formed, an overcoat layer that provides abrasion proofing, a color layer for coloring letters and symbols, and an underlayer. The same decorative method, or different decorative methods, can be arbitrarily selected for the key tops 3, 3, ... and for the case 2 by referring to the overall design of the cellular phone.

With the decorative layer 12, the case 2 of the key unit 1 can be colored and decorated by forming a pattern or a design, so that, in addition to the decorative key tops 3, 3, ..., another design feature can be provided for the key unit 1. It should be noted, however, that since the window 2a must be transparent, a case member 6 formed, as a separate part, of a transparent resin is attached later in order to close the opening of the window 2a. Moreover, a larger variety of designs can be obtained when, except for the window 2a, metal having different color tones is employed to form the individual portions of the case 2.

In the state schematically shown in Fig. 5, the thus arranged key unit 1 is assembled in a cellular phone 13. Specifically, the case 2 of the key unit 1 serves as the upper case of the cellular phone 13, and is bonded by engaging a lower case 14 of another body, and the resultant structure encloses a main body module 15 wherein nucleus portions, such as a required circuit (not shown) like the print circuit board 10 and a display portion 15a, are integrated. At this time, the display portion 15a is located at the position corresponding to the window 2a, which is the clear portion of the case 2.

That is, separate from the key unit 1 that has the case 2, which serves as the upper case of the cellular phone 13, the main body module 15, on which the nucleus portion, including the required circuit and the display portion 15a, is mounted, is designed and assembled with the lower case 14. In this instance, the locations of the window 2a for the case 2 and the display portion 15a for the main body module 15, the locations of the switch elements 11, 11, ... on the print circuit board 10, and of the key group for the key tops 3, 3, ... and the keypad 4 should match when the cellular phone 13 is assembled. With this condition, the case 2 of the key unit 1 engages the lower case 14 of the main body module 15, and the assembly of the cellular phone 13 is completed.

As is described above, since the case 2 of the key unit 1 is formed of a light and rigid metal, ribs for increasing strength are not required, compared with a synthetic resin case, and also, the entire case 2 can be made thinner than can a synthetic resin case, so that this can contribute to a reduction in the weight of the mobile device.

The key unit 1 in this example is integrally formed as the upper case of the cellular phone 13, which has a substantially rectangular outer shape; however, the outer shape of the key unit 1 is not limited to this. For example, the key unit 1 can be employed as the case of a folding cellular phone. Furthermore, instead of providing decorations directly on the surface material of the key unit 1, a film or a membrane sheet that has been appropriately decorated in advance may be employed to cover the entire surfaces of the case 2 and the key tops 3, 3, .... In this case, the waterproofing and dustproofing effects provided by the key unit 1 can be further increased.

### Second Mode (Case wherein a case including a reinforcement plate is made of metal)

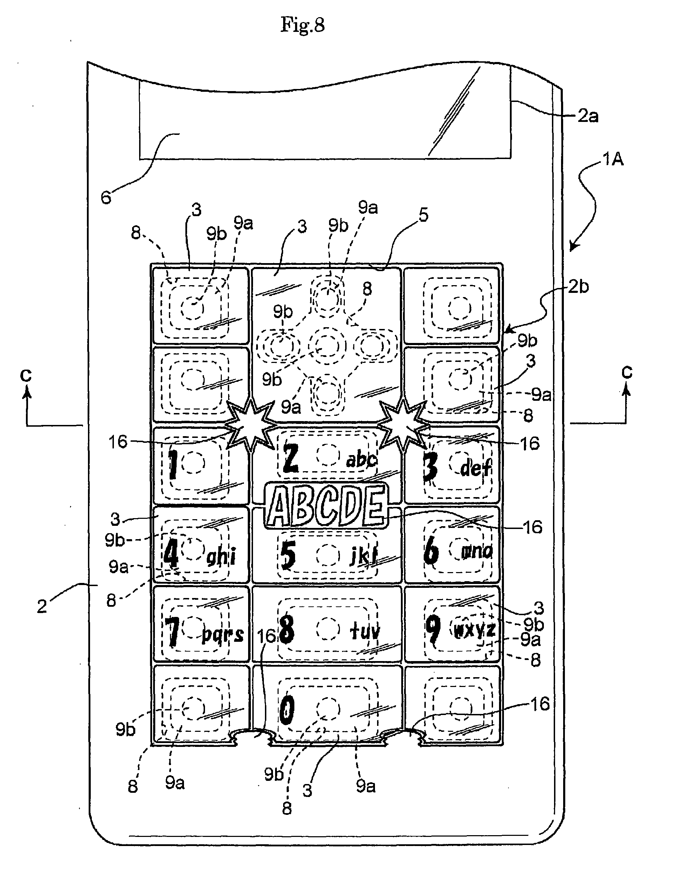

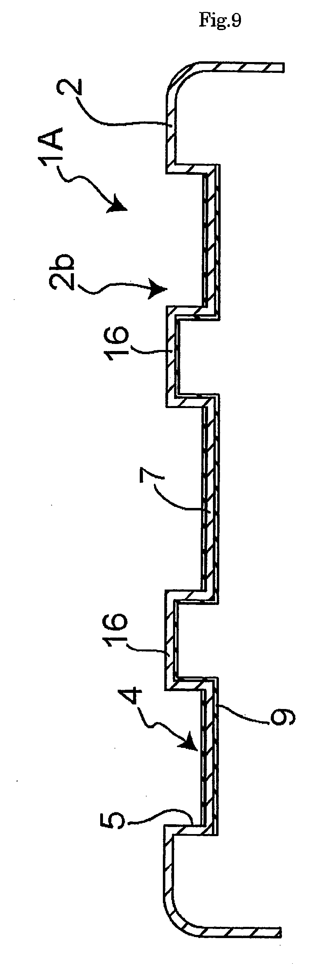

A key unit having a case according to another mode 1A of the present invention is shown in Figs. 8 and 9. As shown in Fig. 8, the key unit 1 A for this mode has a configuration wherein a reinforcement plate (a bottom plate for a recessed portion 5) 7 of a case 2 are partially and outwardly exposed, as exposed portions 16, 16, ..., between the keys of a key arrangement portion 2b. The only difference from the key unit 1 in the first mode is the presence of the exposed portions 16, 16, ... in the key arrangement portion 2b. Therefore, the same reference numerals are employed for the portion having the same configuration as the first mode, and no further explanation for that portion will be given.

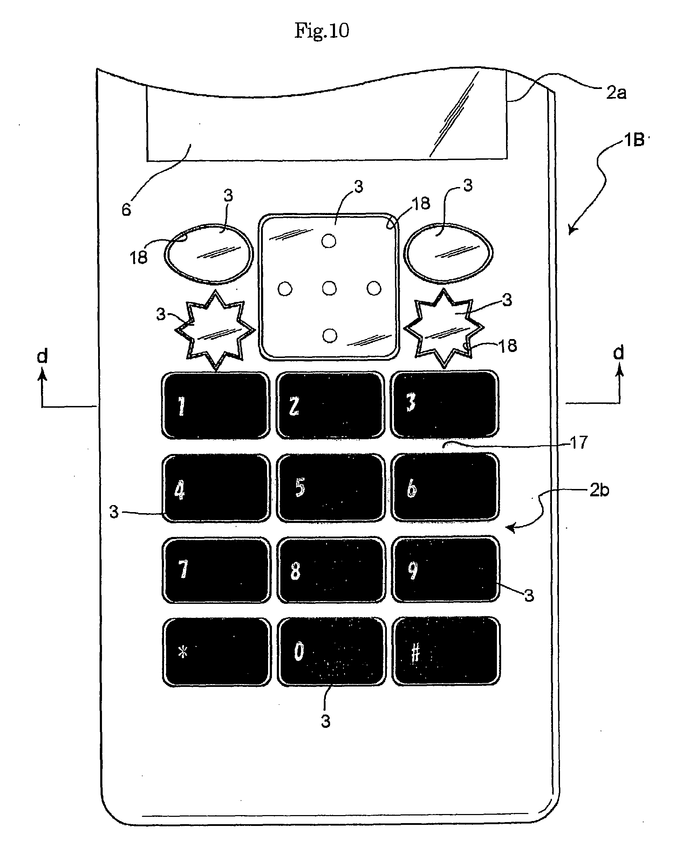

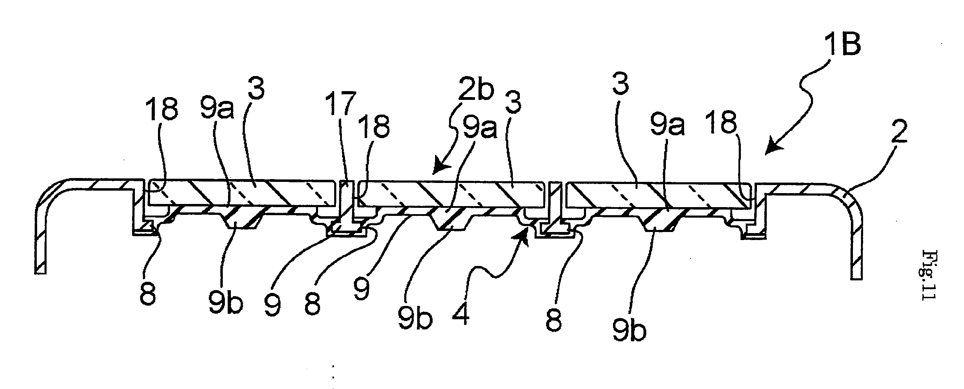

Specifically, as shown in Figs. 10 and 11, the key unit 1A is an example wherein five portions of the reinforcement plate 7 are projected outward, as the exposed portions 16, 16, ..., between the key tops 3, 3, ..., and wherein for the individual exposed portions 16 appropriate shapes, such as star shapes and knot shapes, are formed, and an arbitrary character string "ABCDE" is used.

As described above, for the key unit 1A, since the exposed portions 16, 16, . .., the number and the shapes of which can be freely designated, are provided for the key arrangement portion 2b, not only the decorations on the case 2 and the key tops 3, 3, ..., but also various other decorations and shapes can be provided for the exposed portions 16, 16, ... and can produce more novel design effects for the key unit 1 A and a device that employs the key unit 1A.

### Third Mode 3 (Case wherein a case that includes a reinforcement plate is made of metal)

A key unit 1 B having a case according to an additional mode of the present invention is shown in Figs. 10 and 11. The key unit 1B in this mode differs from those in the above two modes only in one part of the shape of a case 2. That is, multiple exposed portions 16, 16, ... are independently present in the key unit 1A, while in this example, exposed portions 16, 16, ... are revealed for all key tops 2, 2, ..., i.e., in the key unit 1B, multiple exposed portions 16, 16, ... are formed together as an exposed portion 17 that encloses the entire area surrounding the key tops 2, 2, ..., and the exposed portion 17 is integrated with the other portion of the case 2. In other words, recessed portions 18, 18, ... are formed for individual keys, instead of the recessed portion 5 for the key arrangement portion 2b in the key unit 1 or 1A, wherein the keys, including the key tops 3, 3, ..., and the key pad 4 are arranged. Therefore, for the key unit 1 B, the same reference numerals are employed for the same configuration as that for the key units 1 and 1A, and no further explanation for the configuration will be given.

As previously described, the key unit 1B has a structure wherein the exposed portion 17 is exposed between all the key tops 2, 2, ..., and wherein pad members 9, 9, ... are arranged in transparent holes 6, 6, ... in the reinforcement plate 7 and the recessed portions 18, 18, ... are formed around the opening edges of the transparent holes 6, 6, ....

Because not only the case 2 but also various decorations are provided for the exposed portion 17 and for illumination, the thus arranged key unit 1 B can produce novel design effects for a mobile device such as a cellular phone.

It should be noted that, as shown in Fig. 10, the key tops 3 are merely bonded to the pad members 9 adhered to the transparent holes 6 formed in the bottoms of the recessed portions 18, and are located in the recessed portions 18. The conventional key frame functions (the positioning of the key top, maintenance of the gap between the key tops, etc.) are not provided by using the recessed portions 18.

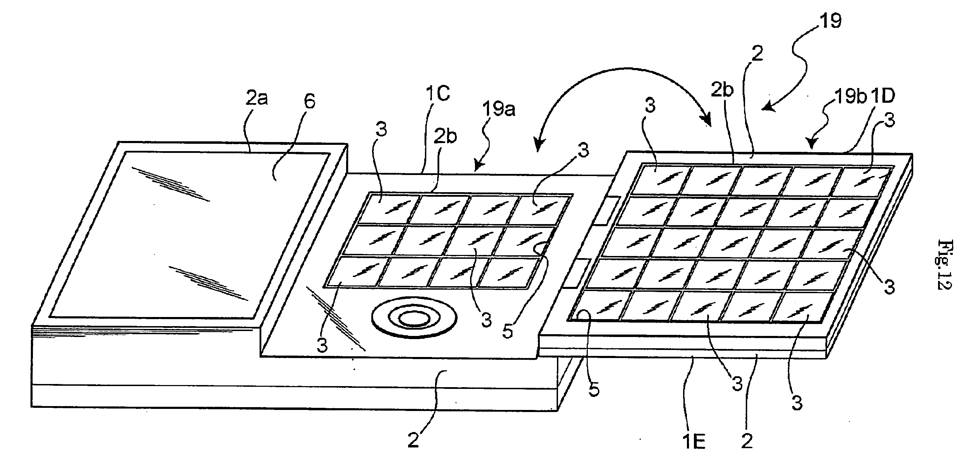

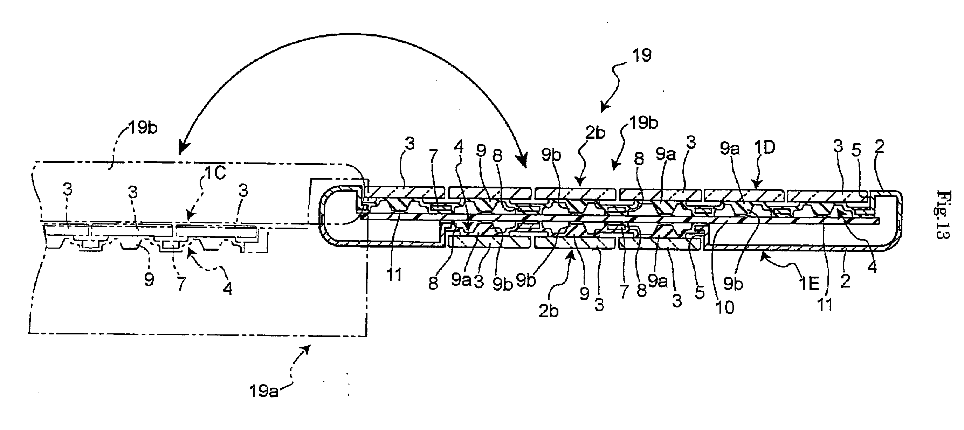

A modification of a mobile device 19 wherein a key unit having a case according to the present invention is mounted is shown in a perspective view in Fig. 12 and a cross-sectional view in Fig. 13. Key units 1C and 1D used by the mobile device 19 have basically the same configuration as those for the key unit 1, even though the shapes are different. Therefore, for the key unit 1C, the same reference numerals are employed for a structure portion that is the same as that for the key unit 1, and no further explanation for the structure portion will be given.

Specifically, for a mobile device (here, a PDA = Personal Digital Assistant is assumed, and is hereinafter referred to as a "PDA") the key unit 1C that serves as an upper case is employed as a main body 19a, and a portion (hereinafter referred to as a "mounted portion) 19b, which serves as an outer upper and lower case assembly, formed of key units 1 D and 1E, is pivoted relative to the main body 19a and is freely stored as a lid on the main body 19a. Key arrangement portions 2b, wherein key groups are located, are provided for the key units 1C, 1D and 1E.

Especially, as schematically shown in the cross-sectional view in Fig. 13, the print circuit board 10 on which the switch elements 11, 11, ... are mounted is enclosed in the mounted portion 19b, and because of the key units 1C and 1D, which serve as the upper case and the lower case, operation keys are provided on the obverse and reverse faces of the mounted portion 19b. Therefore, for the PDA 19, regardless of the size of the main body 19a, multiple operation keys, such as a full key board, can be provided on the closable mounted portion 19b, and the keys provided on the opposite side can be employed to perform an operation, even when the mounted portion 19b is closed.

As described above, a key unit having the case of the invention can present new possibilities for the shape and the design of a mobile device, and can contribute to the simplification of the structure of a mobile device and a reduction in the weight of the mobile structure.

### Fourth Mode (Case wherein a case that includes a reinforcement plate is made of a hard resin)

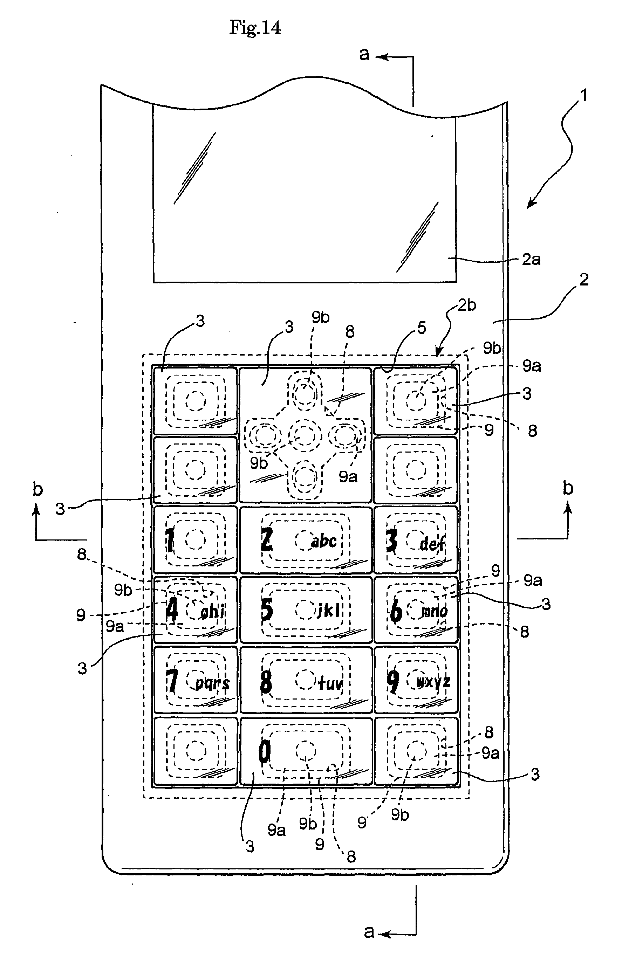

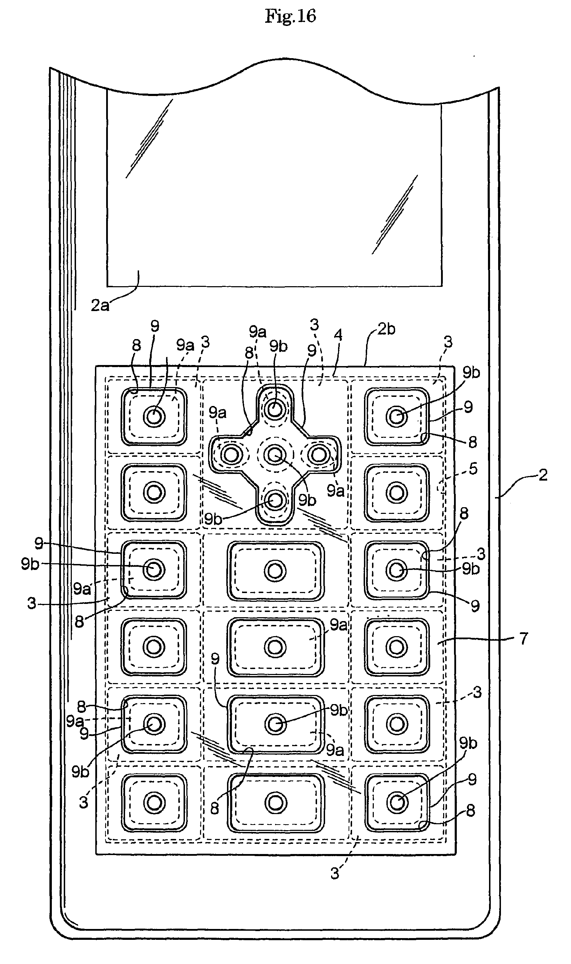

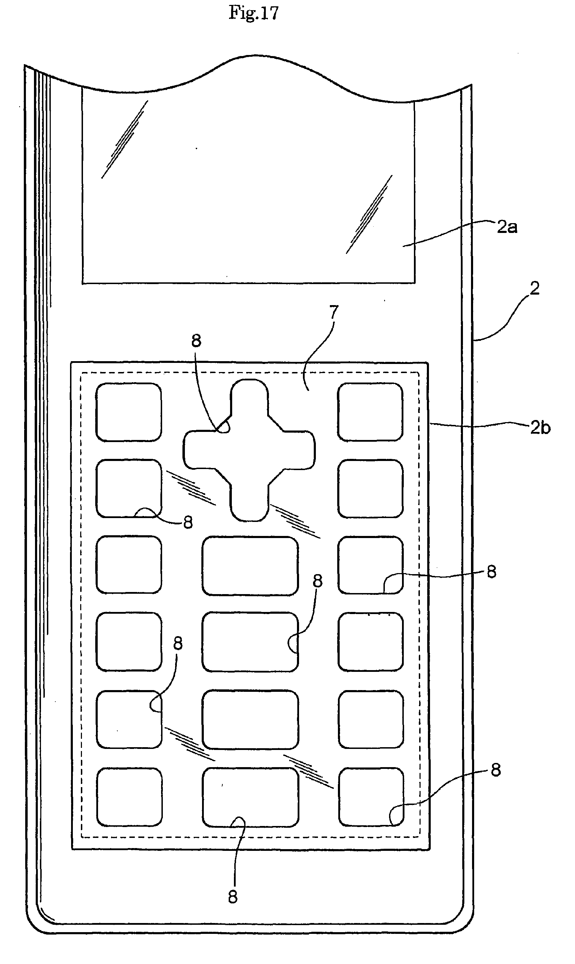

A key unit with a case ACCORDING to a fourth mode of the present invention is shown in Figs. 14 to 22. As a whole, a key unit 1 with a case (hereinafter simply referred to as a "key unit") constitutes the upper case (the upper half segment of a case horizontally divided in two) of a cellular phone.

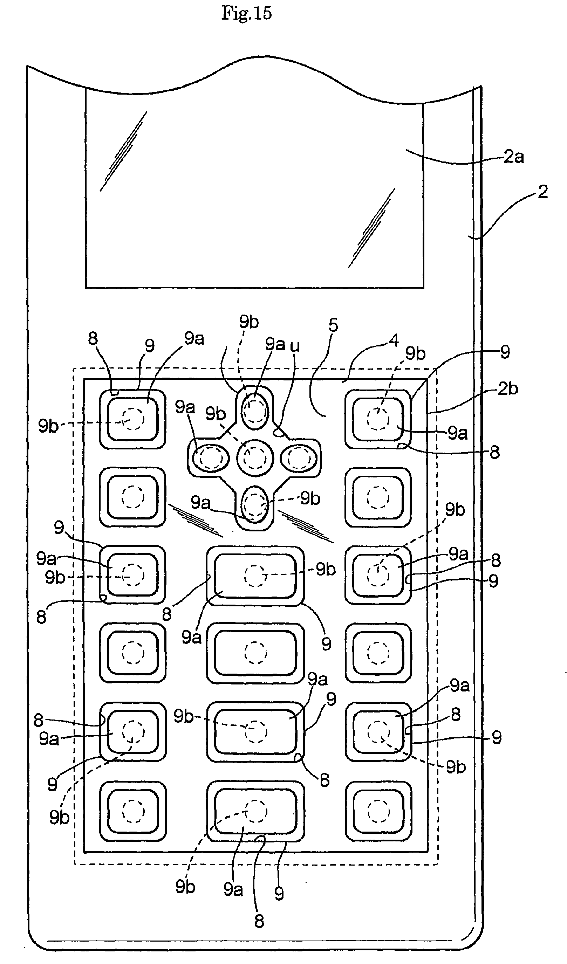

As is shown in Figs. 14 to 16 and Figs. 18 and 19, the key unit 1 comprises a case 2 having a desired shape. As will be described later, the case 2 is formed of an transparent synthetic resin, or suitable colored transparent synthetic resin. As is shown in Fig. 15, a clear window 2a is formed in the upper center of the case 2, and a key arrangement portion 2b, wherein three arrays of keys (key groups), in total, are arranged, is located in the lower center of the case 2. Key tops 3, 3, ..., consisting of the key group and a keypad 4, are located in the key arrangement portion 2b, i.e., the key tops 3, 3, ... and the keypad 4 are located in a recessed portion 5 that is formed in the key arrangement portion 2b. The window 2a,as described later, is a plain portion without decoration by printing or coating formed at the upper surface or inner surface of the case 2. By employing the bottom plate, a reinforcement plate 7 that serves as part of the keypad 4 is formed in the recessed portion 5, and multiple transparent holes 8, 8, ..., having various shapes, are formed in the reinforcement plate 7. It should be noted that a so-called narrow pitch key, according to which between the key tops 3 there is a gap of 0.3 mm or smaller (preferably about 0.1 mm), is employed for the key unit 1.

The keypad 4 includes the reinforcement plate 7 and pad members 9, which are key manipulation portions. The transparent holes 8, 8, ... in the reinforcement plate 7 are closed by the pad members 9. As shown in Figs. 15, 16, 18 and 19, the pad members 9 include key fixing portions 9a, 9a, ..., which are top film portions, composed of a flexible rubber material, that are securely bonded to the inner walls of the openings of the individual transparent holes 8, that are upright and shaped like skirts relative to the positions inside the opening edges of the transparent holes 8, and on which the key tops 3 are mounted and fixed.

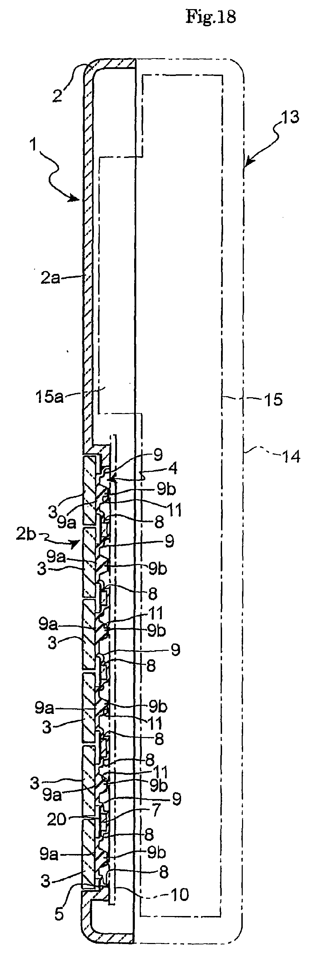

As shown in Figs. 18, it should be noted that portions coupling adjacent pad members 9, 9, under the reinforcement plate 7, are those that are formed during the preparation of the pad members 9, 9, ..., for convenience sake, for the movement of a melted or softened flexible rubber material.

In the key fixing portions 9a of the pad members 9, the key tops 3 are secured to one side (upper faces) by an adhesive, and protrusions (plungers) 9b, 9b, ... for pressing switches are integrally formed on the side opposite the side whereat the key fixing portions 9a are formed. According to the above described arrangement, wherein the case 2, the reinforcement plate 7 and the pad members 9 are integrally formed, a superior waterproof and dustproof structure can be provided for the key portion of the conventional mobile device, for which the waterproofing and dustproofing are the most fragile.

The case 2 of the key unit 1 is formed using a method, such as casting, forging or sheet metal processing, that employs aluminum, magnesium, stainless steel, titanium and various types of alloys, while the key tops 3 are formed of a hard resin having superior transparency, such as PC (polycarbonate resin), PET(polyethylene terephthalate resin) or PMMA (poly methl methacrylate/acrylic resin). The pad members 9 are formed like a film structure by using an arbitrary type of rubber material, such as a light-transmitting silicon rubber, or a thermoplastic elastomer, i.e., a light-transmitting, flexible rubber material. The keypad 4 is formed using so-called insert forming, whereby the pad members 9 are formed while the case 2 that has been molded is held in a die.

It is preferable that, at least for the portion corresponding to the reinforcement plate 7 of the case 2 that is to be integrally bonded with the pad members 9, various surface improvement processes and the primer process for increasing the adhesion between various types of hard resins and the flexible rubber material be performed before the insert forming is accomplished (this also applies for the following, additional modes).

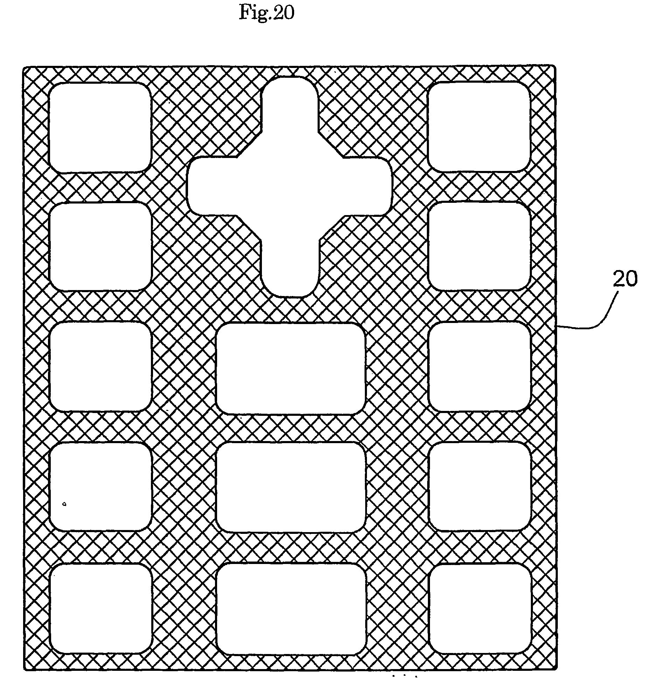

Further, on the reinforcement plate 7 that is integrally formed with the pad members 9, 9, ..., a light blocking sheet 20 shown in Fig. 20 is overlaid in order to cover the surface of the pad members 9, 9, ..., except for the key fixing portions 9a. This light blocking sheet 20 is not a requisite component for the key unit 1 of this invention. However, it is preferable that during light illumination the light blocking sheet 20 be used to prevent light leakage between the keys and between the keys and the case 2, and to improve the overall appearance of the key unit 1.

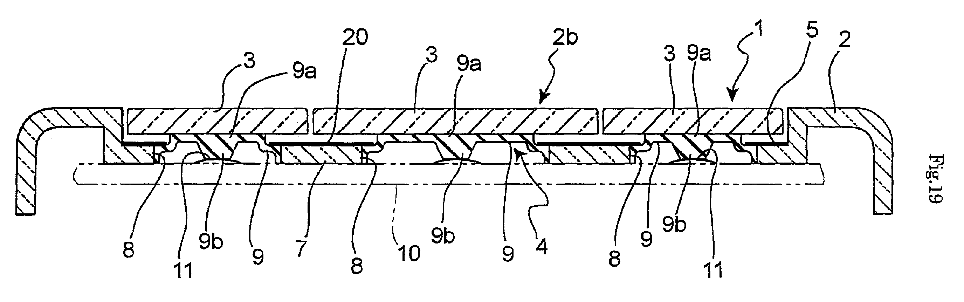

In Figs. 18 and 19, reference numeral 10 denotes a print circuit board on which multiple switch elements (metal dome switches, contacts (not shown), etc.) 11, 11, ... are arranged. Further, in this mode, the key fixing portions 9a, 9a, ... are so structured that they project outward, toward one side (upward); however, this structure need not always be employed, and an appropriate shape can be employed, e.g., the key fixing portions 9a, 9a, ... may be formed at the same height as the surface of the reinforcement plate 7. In short, the key fixing portions 9a, 9a, ... need only be shaped so that, when a key top 3 is pressed, a switch element 11 can be accurately operated by a plunger 9b.

On the upper faces or the lower faces (the faces whereat the key tops 3 are bonded to the pad members 9) of the key tops 3, 3, ..., decorations, including characters and symbols that represent the functions of corresponding keys, are provided by using the various decorative methods described above. Further, the same decorations are provided for part of the recessed portion 5 of the key arrangement portion 2b, i.e., the surface of the individual portions of the case 2, except for the outer edge of the reinforcement plate 7.

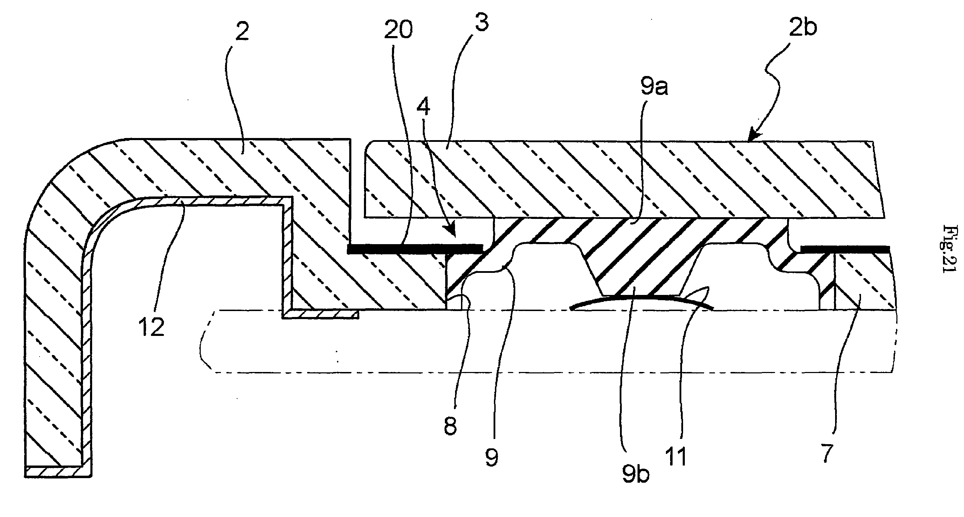

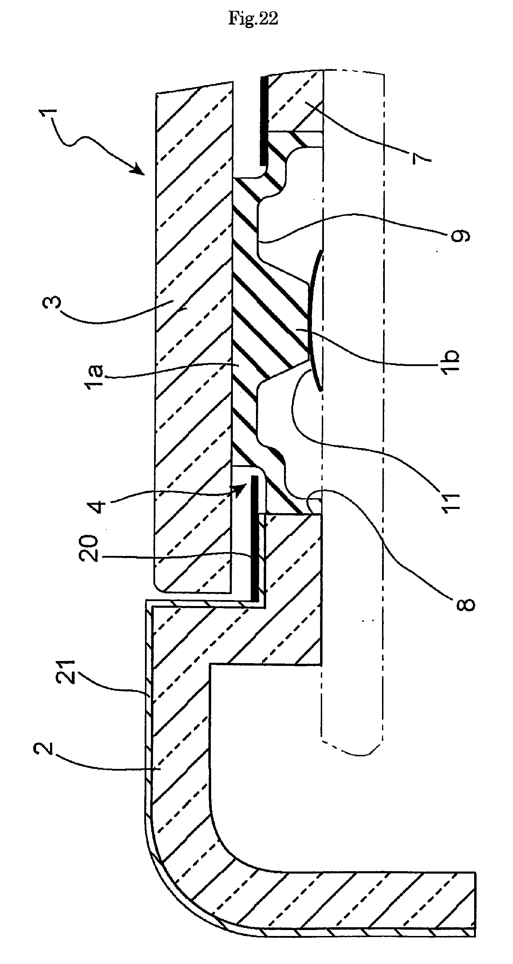

As shown in Fig. 21, a decorative layer 12 is formed on the inner surface (under face) of the case 2 using arbitrary means. As shown in Fig. 22, a decorative layer 21 is formed on the surface (upper face) of the case 2.

The decorative layer12, 21 includes a plurality of layers inherent to various decorative methods. These layers, when decorative printing or painting is provided for the surface, are, for example, a character layer for which positive or negative characters, such as letters and symbols, are formed, an overcoat layer that provides abrasion proofing, a color layer for coloring letters and symbols, and an underlayer. The same decorative method, or different decorative methods, can be arbitrarily selected for the key tops 3, 3, ... and for the case 2 by referring to the overall design of the cellular phone.

With the decorative layer 12,21 the case 2 of the key unit 1 can be colored and decorated by forming a pattern or a design, so that, in addition to the decorative key tops 3, 3, ..., another design feature can be provided for the key unit 1.

Furthermore, arbitrary positive or negative characters and symbols, and patterns, can also be formed on the case 2 as well as on the keys. When a decorative layer is to be deposited on the surface of the case 2, the case 2 need not always be formed of a transparent resin, and can be formed of an opaque resin having an arbitrary color. It should be noted, however, that since the window 2a must be transparent, two color formations, employing a transparent resin and an opaque resin, should be performed, or the window 2a should be formed as a separate part and attached later. Or, the individual portion of the case 2, except for the window 2a, can be formed by a multi-color formation that provides a larger design variety.

In the state schematically shown in Fig. 18, the thus arranged key unit 1 is assembled in a cellular phone 13. Specifically, the case 2 of the key unit 1 serves as the upper case of the cellular phone 13, and is bonded by engaging a lower case 14 of another body, and the resultant structure encloses a main body module 15 wherein nucleus portions, such as a required circuit (not shown) like the print circuit board 10 and a display portion 15a, are integrated. At this time, the display portion 15a is located at the position corresponding to the window 2a, which is the clear portion of the case 2.

That is, separate from the key unit 1 that has the case 2, which serves as the upper case of the cellular phone 13, the main body module 15, on which the nucleus portion, including the required circuit and the display portion 15a, is mounted, is designed and assembled with the lower case 14. In this instance, the locations of the window 2a for the case 2 and the display portion 15a for the main body module 15, the locations of the switch elements 11, 11, ... on the print circuit board 10, and of the key group for the key tops 3, 3, ... and the keypad 4 should match when the cellular phone 13 is assembled. With this condition, the case 2 of the key unit 1 engages the lower case 14 of the main body module 15, and the assembly of the cellular phone 13 is completed.

The key unit 1 in this example is integrally formed as the upper case of the cellular phone 13, which has a substantially rectangular outer shape; however, the outer shape of the key unit 1 is not limited to this. For example, the key unit 1 can be employed as the case of a folding cellular phone. Furthermore, instead of providing decorations directly on the surface material of the key unit 1, a film or a membrane sheet that has been appropriately decorated in advance may be employed to cover the entire surfaces of the case 2 and the key tops 3, 3, .... In this case, the waterproofing and dustproofing effects provided by the key unit 1 can be further increased.

Fifth Mode (Case wherein a case that includes a reinforcement plate is made of a hard resin)

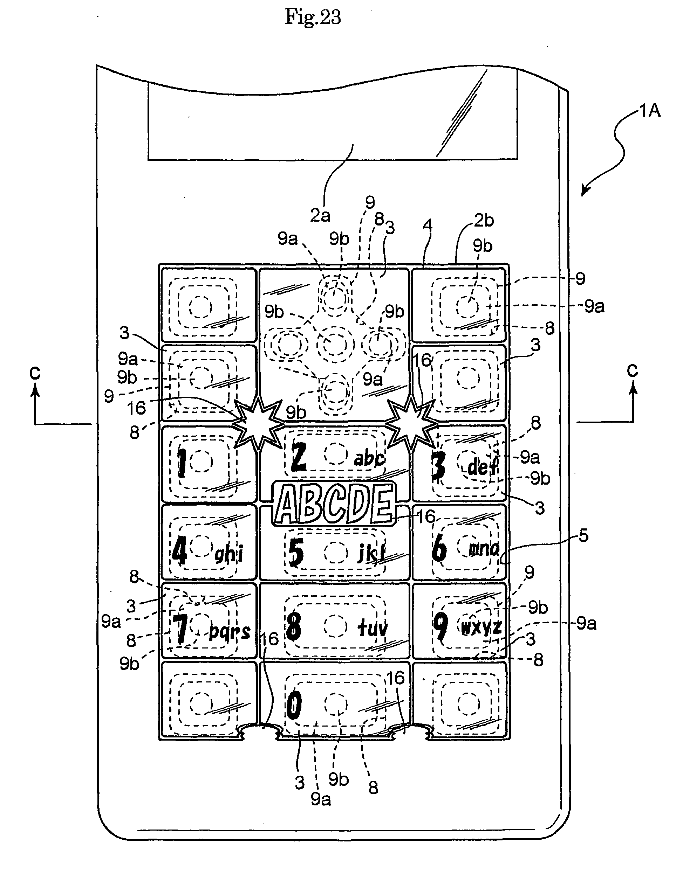

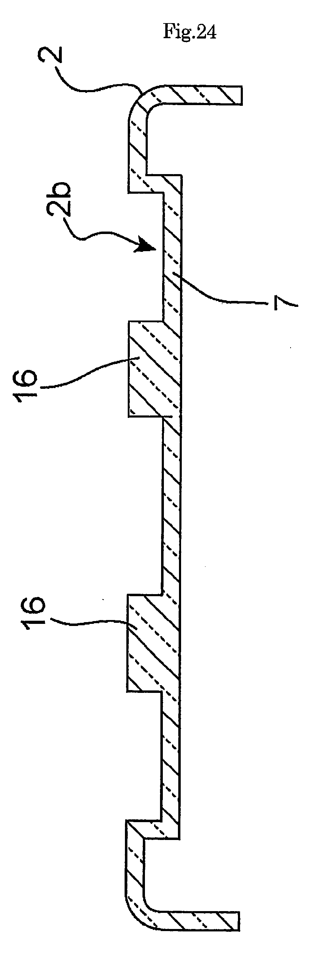

A key unit having a case according to another mode 1A of the present invention is shown in Figs. 23 and 24. As shown in Fig. 23, the key unit 1 A for this mode has a configuration wherein a reinforcement plate (a bottom plate for a recessed portion 5) 7 of a case 2 are partially and outwardly exposed, as exposed portions 16, 16, ..., between the keys of a key arrangement portion 2b. The only difference from the key unit 1 in the first mode is the presence of the exposed portions 16, 16, ... in the key arrangement portion 2b. Therefore, the same reference numerals are employed for the portion having the same configuration as the first mode, and no further explanation for that portion will be given.

Specifically, as shown in Figs. 23 and 24, the key unit 1A is an example wherein five portions of the reinforcement plate 7 are projected outward, as the exposed portions 16, 16, ..., between the key tops 3, 3, ..., and wherein for the individual exposed portions 16 appropriate shapes, such as star shapes and knot shapes, are formed, and an arbitrary character string "ABCDE" is used.

As described above, for the key unit 1A, since the exposed portions 16, 16, . .., the number and the shapes of which can be freely designated, are provided for the key arrangement portion 2b, not only the decorations on the case 2 and the key tops 3, 3, ..., but also various other decorations and shapes can be provided for the exposed portions 16, 16, ... and can produce more novel design effects for the key unit 1A and a device that employs the key unit 1A.

Sixth Mode (Case wherein a case that includes a reinforcement plate is made of a hard resin)

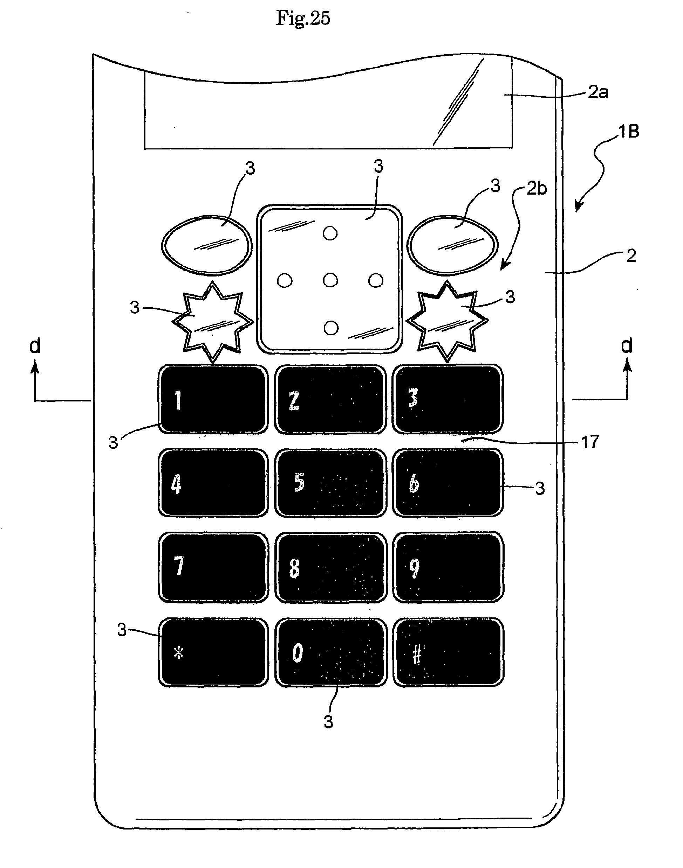

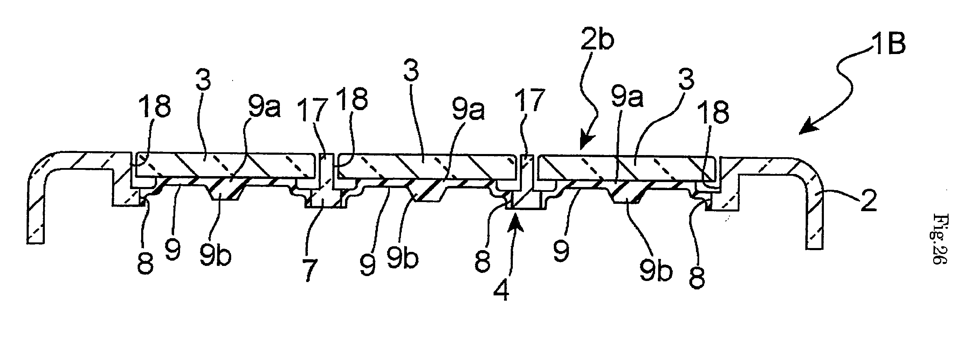

A key unit 1 B having a case according to an additional mode of the present invention is shown in Figs. 25 and 26. The key unit 1 B in this mode differs from those in the above two modes only in one part of the shape of a case 2. That is, multiple exposed portions 16, 16, ... are independently present in the key unit 1B, while in this example, exposed portions 16, 16, ... are revealed for all key tops 2, 2, ..., i.e., in the key unit 1B, multiple exposed portions 16, 16, .. . are formed together as an exposed portion 17 that encloses the entire area surrounding the key tops 2, 2, ..., and the exposed portion 17 is integrated with the other portion of the case 2. In other words, recessed portions 18, 18, ... are formed for individual keys, instead of the recessed portion 5 for the key arrangement portion 2b in the key unit 1 or 1 A, wherein the keys, including the key tops 3, 3, ..., and the key pad 4 are arranged. Therefore, for the key unit 1B, the same reference numerals are employed for the same configuration as that for the key units 1 and 1A, and no further explanation for the configuration will be given.

As shown in fig.26, the key unit 1B has a structure wherein the exposed portion 17 is exposed between all the key tops 2, 2, ..., and wherein pad members 9, 9, ... are arranged in transparent holes 8, 8, ... in the reinforcement plate 7 and the recessed portions 18, 18, ... are formed around the opening edges of the transparent holes 6, 6, ....

Because not only the case 2 but also various decorations are provided for the exposed portion 17 and for illumination, the thus arranged key unit 1 B can produce novel design effects for a mobile device such as a cellular phone.

It should be noted that, as shown in Fig. 26, the key tops 3 are merely bonded to the pad members 9 adhered to the transparent holes 6 formed in the bottoms of the recessed portions 18, and are located in the recessed portions 18. The conventional key frame functions (the positioning of the key top, maintenance of the gap between the key tops, etc.) are not provided by using the recessed portions 18.

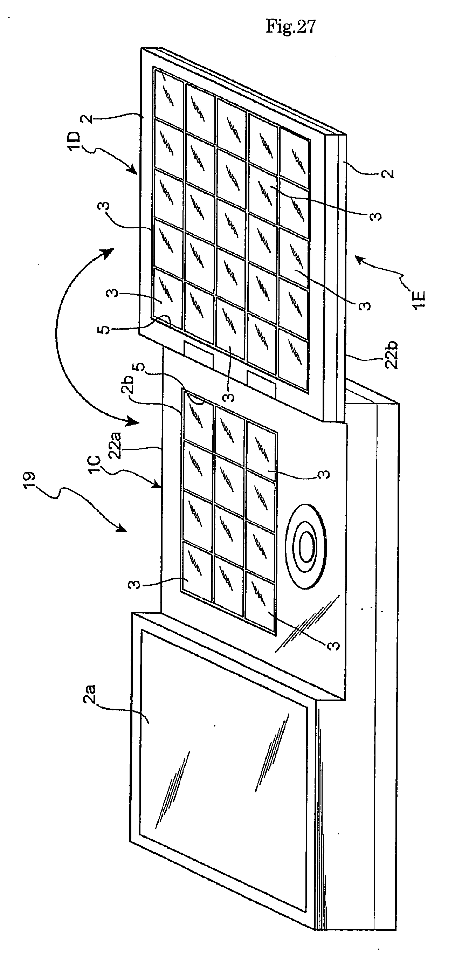

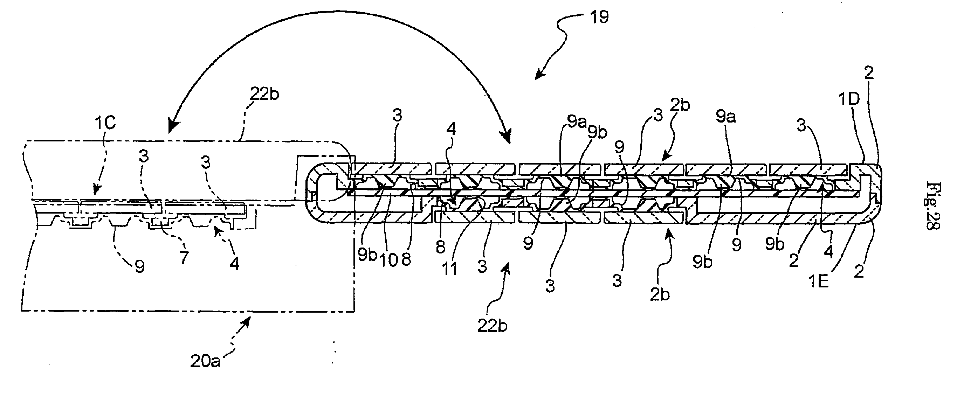

A modification of a mobile device 19 wherein a key unit having a case according to the present invention is mounted is shown in a perspective view in Fig. 27 and a cross-sectional view in Fig. 28. Key units 1C and 1D used by the mobile device 19 have basically the same configuration as those for the key unit 1, even though the shapes are different. Therefore, for the key unit 1C, the same reference numerals are employed for a structure portion that is the same as that for the key unit 1, and no further explanation for the structure portion will be given.

Specifically, for a mobile device (here, a PDA = Personal Digital Assistant is assumed, and is hereinafter referred to as a "PDA") the key unit 1C that serves as an upper case is employed as a main body 22a, and a portion (hereinafter referred to as a "mounted portion) 22b, which serves as an outer upper and lower case assembly, formed of key units 1D and 1E, is pivoted relative to the main body 22a and is freely stored as a lid on the main body 22a. Key arrangement portions 2b, wherein key groups are located, are provided for the key units 1C, 1 D and 1E.

Especially, as schematically shown in the cross-sectional view in Fig. 28, the print circuit board 10 on which the switch elements 11, 11, ... are mounted is enclosed in the mounted portion 22b, and because of the key units 1C and 1D, which serve as the upper case and the lower case, operation keys are provided on the obverse and reverse faces of the mounted portion 19b. Therefore, for the PDA 19, regardless of the size of the main body 22a, multiple operation keys, such as a full key board, can be provided on the closable mounted portion 22b, and the keys provided on the opposite side can be employed to perform an operation, even when the mounted portion 22b is closed.

As described above, a key unit having the case of the invention can present new possibilities for the shape and the design of a mobile device, and can contribute to the simplification of the structure of a mobile device and a reduction in the weight of the mobile structure.

### Industrial Applicability

Since the present invention relates to a key unit that is employed for a mobile device, such as a cellular phone or a portable information terminal device (PDA), the present invention can be applied not only for a field for the manufacture of electronic apparatuses and various electronic parts, but also for broader industrial fields, such as for an information communication industry that employs these apparatuses.

## Claims

1. A key unit having a case wherein a key operation portion of a keypad is formed using a flexible rubber material, and the other portion of the keypad is formed using a rigid reinforcement plate, or is reinforced by a reinforcement plate, **characterized by** the integral formation, with the key unit that includes the reinforcement plate, of at least a part of a case for a mobile device on which the key unit is to be mounted.

2. A key unit having a case according to claim 1, **characterized by** providing decoration on outwardly exposed portions of the reinforcement plate that includes the case portion, or by forming arbitrary characters or symbols on the pertinent portions.

3. A key unit having a case according to claim 1, **characterized by** forming the reinforcement plate that includes the case portion by employing one or a plurality of types of metal materials selected from among magnesium, aluminum, stainless steel, copper, gold and titanium, and alloys of them.

4. A key unit having a case according to claim 1, **characterized by** forming the reinforcement plate including the case portion by employing a resin selected from a transparent hard resin group of PC (polycarbonate resin), PET (polyethylene terephthalate resin) and PMMA (polymethyl methacrylate/acrylic resin), and mixtures of them.

5. A key unit having a case according to claim 2, **characterized by** providing decoration for the outwardly exposed portions of the reinforcement plate, including the case portion, by employing an arbitrary method selected from a method group of printing, painting, and metal or non-metal film deposition methods.
